# EUROPEAN PATENT APPLICATION

(11) **EP 4 601 115 A1**
(43) Date of publication of application: **13.08.2025**
(21) Application number: 23880118.7
(22) Date of filing: 12.10.2023
(51) Int. Cl.: H01Q 1/22, H01Q 1/38, H01Q 1/24, H01Q 1/48

(54) **ANTENNA STRUCTURE FOR NEAR FIELD COMMUNICATION, AND ELECTRONIC DEVICE COMPRISING SAME**

(30) Priority: 18.10.2022 KR 20220134507; 25.11.2022 KR 20220160968
(71) Applicant: Samsung Electronics Co., Ltd., Suwon-si, Gyeonggi-do 16677 (KR)
(72) Inventor: SONG, Keumsu, Suwon-si Gyeonggi-do 16677 (KR); YUN, Sumin, Suwon-si Gyeonggi-do 16677 (KR)
(74) Representative: Gulde & Partner
(86) International application number: PCT/KR2023/015774
(87) International publication number: WO 2024/085540

(57) **Abstract**

An electronic device may comprise: a metal frame; a circuit board; at least one wireless communication circuit disposed on the circuit board; a near field communication (NFC) circuit disposed on the circuit board; a first switch circuit; and a second switch circuit. The metal frame may comprise: a conductive part; a first connection part formed in one direction from the conductive part; a second connection part formed in one direction from the conductive part; and a ground part formed in one direction from the conductive part. The ground part may be disposed between the first connection part and the second connection part on the basis of the conductive part.

## Description

### [Technical Field]

Various embodiments of the present invention relate to an antenna structure for a short-range wireless communication and an electronic device comprising the same.

### [Background Art]

A near field communication (NFC) is a short-range contactless communication and is used for file transfer and secure connection between devices at close range using an NFC standard protocol. Recently, a card emulation function and a point of sale (POS) function using NFC have been implemented in electronic devices, and convenient financial transactions between consumers and merchants are possible through NFC communication between terminals without the need for a separate NFC POS
The above-described information may be provided as a related art for the purpose of helping to understand the present disclosure. No claim or determination is raised as to whether any of the above-described information may be applied as a prior art related to the present disclosure.

### [Disclosure]

### [Technical Solution]

An electronic device according to various embodiments is provided. The electronic device may comprise a metal frame, a circuit board, at least one wireless communication circuit disposed on the circuit board, a near field communication (NFC) communication circuit disposed on the circuit board, a first switch circuit, and a second switch circuit. The metal frame may include a conductive member, a first connection member formed in one direction from the conductive member, a second connection member formed in one direction from the conductive member, and a ground member formed in one direction from the conductive member. The ground member may be disposed, based on the conductive member, between the first connection member and the second connection member. The first connection member of the metal frame may be electrically connected to the at least one wireless communication circuit or the NFC communication circuit through the first switch circuit. The second connection member of the metal frame may be electrically connected to the at least one wireless communication circuit or the NFC communication circuit through the second switch circuit. When the NFC communication circuit is electrically connected to the first connection member and the second connection member of the metal frame, a positive signal may be fed to the first connection member and a negative signal may be fed to the second connection member.

An electronic device according to various embodiments is provided. The electronic device may comprise a metal frame, a circuit board, and a near field communication (NFC) communication circuit disposed on the circuit board, wherein the metal frame may include a conductive portion, a first connection portion formed in one direction from the conductive portion, a second connection portion formed in one direction from the conductive portion, and a ground portion formed in one direction from the conductive portion. The ground portion, based on the conductive portion, may be disposed between the first connection portion and the second connection portion. The first connection portion of the metal frame may be electrically connected to the NFC communication circuit. The second connection portion of the metal frame may be electrically connected to the NFC communication circuit. A positive signal may be fed to the first connection portion and a negative signal may be fed to the second connection portion.

### [Description of the Drawings]

FIG. 1 is a block diagram of an electronic device in a network environment.
FIG. 2 illustrates an example of an antenna structure of a metal frame.
FIG. 3A illustrates an example of a loop for Near Field Communication (NFC) in an antenna structure of a metal frame.
FIG. 3B illustrates an example of a magnetic field of an NFC signal.
FIGS. 4A to 4B illustrate an example of antenna structures shared by an NFC communication circuit and a wireless communication circuit.
FIGS. 5A, 5B, and 5C are diagrams for explaining a principle of a loop of an antenna structure and an NFC communication circuit.
FIG. 6 illustrates an example of loop formation of an antenna structure and a wireless communication circuit.
FIGS. 7A and 7B illustrate examples of an antenna structure shared by an NFC communication circuit and a wireless communication circuit.
FIGS. 8A to 8B illustrate an example of arrangement of an antenna structure for NFC.
FIGS. 9A to 9B illustrate an example in which an antenna structure for NFC is disposed at an upper end of an electronic device.
FIGS. 10A, 10B, and 10C illustrate an example in which an antenna structure for NFC is disposed at an upper end of an electronic device.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to a component of an electronic device (e.g., substrate, printed circuit board (PCB), flexible PCB (FPCB), printed board assembly (PBA), module, antenna, antenna element, circuit, processor, chip, element, or device), terms referring to a shape of a component (e.g., structure, structure object, support portion, contact portion, or protrusion), terms referring to a connection portion between structures (e.g., connection portion, contact portion, support portion, contact structure, conductive member, or assembly), terms referring to an open structure of an antenna (e.g., slot, slit, or opening), terms referring to a circuit (e.g., PCB, FPCB, signal line, ground line, feeding line, data line, RF signal line, antenna line, RF path, RF module, RF circuit, splitter, divider, coupler, or combiner) and the like, used in the following description are exemplified for convenience of explanation. Therefore, the present disclosure is not limited to terms to be described below, and another term having an equivalent technical meaning may be used. In addition, a term such as '...unit, '...device, '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Hereinafter, various embodiments of the present disclosure relate to an electronic device including conductive portions for operating as an NFC antenna radiator or a non-NFC antenna radiator as an electrical path is changed. For example, various embodiments of the present disclosure describe a technology for utilizing conductive members of a frame of an upper end or a lower end of an electronic device as antennas. The conductive members of the frame may be divided by segment portions of the frame.

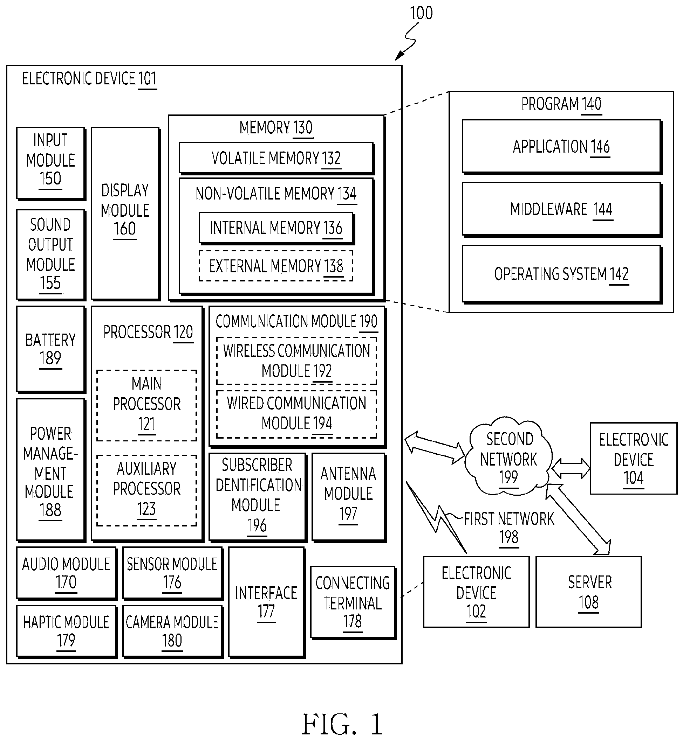

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

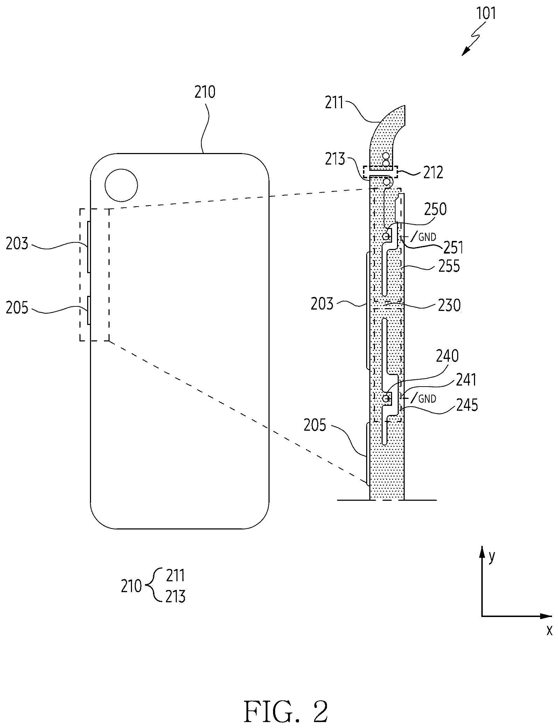

FIG. 2 illustrates an example of an antenna structure of a metal frame according to an embodiment. In case that an NFC antenna is positioned to face a rear surface of the electronic device 101, when performing NFC communication between the electronic device 101 and another electronic device (e.g., the electronic device 101), rear surfaces are positioned to face each other, so one device may have difficulty viewing or operating a screen. In order to increase convenience related to NFC, at least a portion of the metal frame 210, which is a side member of the electronic device 101, may be used as an NFC antenna. Hereinafter, an area of the electronic device 101 including one end facing an upward direction (e.g., (+) y-axis direction) may be referred to as an upper end area of the electronic device 101. An area of the electronic device 101 including one end facing a downward direction (e.g., (-) y-axis direction) may be referred to as a lower end area of the electronic device 101. An area of the electronic device 101 including one end facing a lateral direction (e.g., (-) x-axis direction or (+) x-axis direction) may be referred to as a side area of the electronic device 101.

Referring to FIG. 2, the electronic device 101 may include a metal frame 210. In an embodiment, a volume key 203 or a power key 205 may be positioned on a side surface of the electronic device 101. In an embodiment, the metal frame 210 may include a plurality of conductive portions. For example, as a portion of the metal frame 210 is positioned between non-conductive portions (e.g., the non-conductive portion 212), a conductive portion may be divided. For example, the metal frame 210 may include a first conductive portion 211 and a second conductive portion 213.

According to an embodiment, the metal frame 210 may include a ground portion 230, a first connection portion 240, and/or a second connection portion 250. For example, the ground portion 230 may be formed in a direction from the second conductive portion 213 toward the inside of the electronic device 101. For example, in order to be physically connected to a support member of the metal frame 210, the ground portion 230 may have a shape protruding from the second conductive portion 213. The ground portion 230 may be used for grounding signals for wireless communication (e.g., NFC communication, non-NFC communication). In an embodiment, the metal frame 210 may include the first connection portion 240. The first connection portion 240 may refer to an area (e.g., protrusion) formed in a direction from the second conductive portion 213 of the metal frame 210 toward the inside of the electronic device 101. For example, the first connection portion 240 may be electrically connected to a circuit board (e.g., printed circuit board (PCB) or printed board assembly (PBA)) on which a wireless communication circuit and an NFC communication circuit of the electronic device 101 are disposed. For example, the RF signal may be fed to the second conductive portion 213 through the first connection portion 240. The first connection portion 240 may be electrically connected to one point 241 of the support member through the ground portion 230. The first connection portion 240 may correspond to a (+) port, and the one point 241 may correspond to a (-) port or a ground (GND). The first connection portion 240 may be connected to a wireless communication circuit. In an embodiment, the metal frame 210 may include a second connection portion 250. The second connection portion 250 may refer to an area (e.g., protrusion) formed in a direction from the second conductive portion 213 of the metal frame 210 toward the inside of the electronic device 101. For example, the second connection portion 250 may be electrically connected to a circuit board on which the wireless communication circuit and the NFC communication circuit of the electronic device 101 are disposed. For example, the RF signal may be fed to the second conductive portion 213 through the second connection portion 250. The second connection portion 250 may be electrically connected to one point 251 of the support member through the ground portion 230. The second connection portion 250 may correspond to a (+) port, and the one point 251 may correspond to a (-) port or ground. The second connection portion 250 may be connected to a wireless communication circuit.

In an embodiment, if a feed portion of the electronic device 101 is connected to the first connection portion 240, at least a portion of the metal frame 210 including the second conductive portion 213 may form a loop for operating as a first antenna 245. If a feed portion of the electronic device 101 is connected to the second connection portion 250, at least a portion of the metal frame 210 including the second conductive portion 213 may form a loop for operating as a second antenna 255. The loop for the first antenna 245 and the loop for the second antenna 255 may be disposed side by side, and may overlap each other at the ground portion 230. The feed portions may be used to feed RF signals of a non-NFC communication circuit, but may also be used to feed RF signals of an NFC communication circuit. According to an embodiment, the electronic device 101 may perform NFC communication by feeding RF signals for NFC communication to the first connection portion 240 and the second connection portion 250 instead of RF signals for non-NFC communication. In an embodiment, switch circuits (or switch modules) inside the electronic device 101 may be used to feed RF signals for NFC communication. For example, the RF signals for non-NFC communication may be transmitted on a first frequency band (e.g., about 600 MHz or more). For example, the RF signals for NFC communication may be transmitted on a second frequency band (e.g., 14 MHz or less).

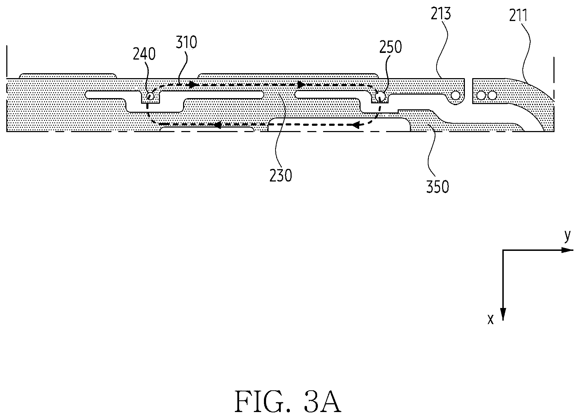

FIG. 3A illustrates an example of a loop for near field communication (NFC) in a metal frame according to an embodiment. The same reference number may be referred to for the same description between drawings.

Referring to FIG. 3A, a metal frame of an electronic device (e.g., the electronic device 101) may include a first conductive portion 211 and a second conductive portion 213. For example, the second conductive portion 213 may be disposed in one direction (e.g., y-axis direction). For example, the first connection portion 240 and the second connection portion 250 may have a shape protruding from the second conductive part 213 in one direction (e.g., x-axis direction). The electronic device 101 may feed a first signal to the first connection portion 240. For example, the first connection portion 240 may be electrically connected to a communication circuit of the electronic device 101, through physical contact (e.g., contact via C-clip) with a circuit board (e.g., PCB or PBA) on which the communication circuit of the electronic device 101 is disposed. The electronic device 101 may feed a second signal to the second connection portion 250. For example, the second connection portion 250 may be electrically connected through physical contact (e.g., contact via C-clip) with a circuit board on which the communication circuit of the electronic device 101 is disposed.

According to an embodiment, the NFC communication circuit may feed a positive signal to the first connection portion 240 and a negative signal to the second connection portion 250. The first connection portion 240 may correspond to a first port and the second connection portion 250 may correspond to a second port. A (+) terminal of the NFC communication circuit may be connected to the first port, and a (-) terminal of the NFC communication circuit may be connected to the second port. As RF signals having different polarities are fed to the first connection portion 240 and the second connection portion 250, an electrical path of a loop 310 may be formed in the order of the first connection portion 240, the second conductive portion 213, and the second connection portion 250. For example, the loop 310 may be formed to surround a first loop (e.g., a loop for the first antenna 245) formed by the first connection portion 240, a portion of the second conductive portion 213, the ground portion 230, and the support member 350 and a loop (e.g., a loop for the second antenna 255) formed by the second connection portion 250, the support member 350, the ground part 230, and another portion of the second conductive portion 213. For example, currents may circulate in a form of a loop within the loop 310 formed by the first connection portion 240, the second conductive portion 213, the second connection portion 250, and the support member 350. For example, currents circulating along the loop 310 may be generated by the positive signal and the negative signal. In an embodiment, the loop 310 formed by at least a portion of the metal frame 210 may operate as a loop antenna for NFC.

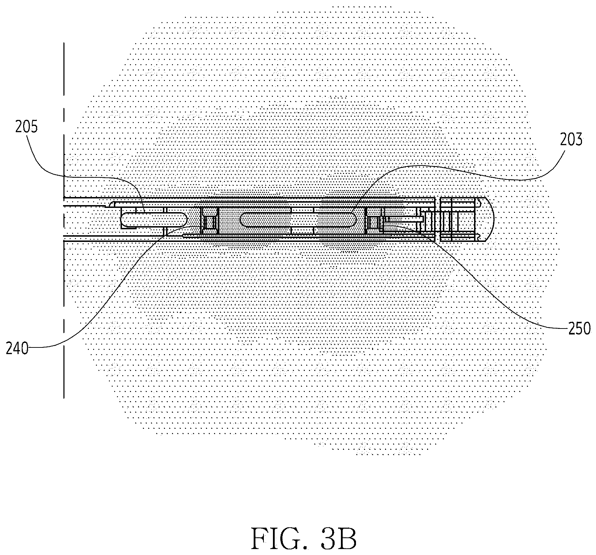

FIG. 3B illustrates an example of a magnetic field of an NFC signal according to an embodiment. The NFC signal means a radiation signal according to feeding of an RF signal of an NFC communication circuit. The same reference number may be referred to for the same description between drawings.

Referring to FIG. 3B, as an RF signal fed to the first connection portion 240 is radiated, a relatively high magnetic field may be observed near the first connection portion 240. As an RF signal fed to the second connection portion 250 is radiated, a relatively high magnetic field may be observed near the second connection portion 250. Additionally, a high magnetic field may be observed in the area, excluding the grounding portion 230, between the first connecting portion 240 and the second connecting portion 250. A magnetic field may be formed by currents flowing through a loop (e.g., the loop 310) between the first connection portion 240 and the second connection portion 250.

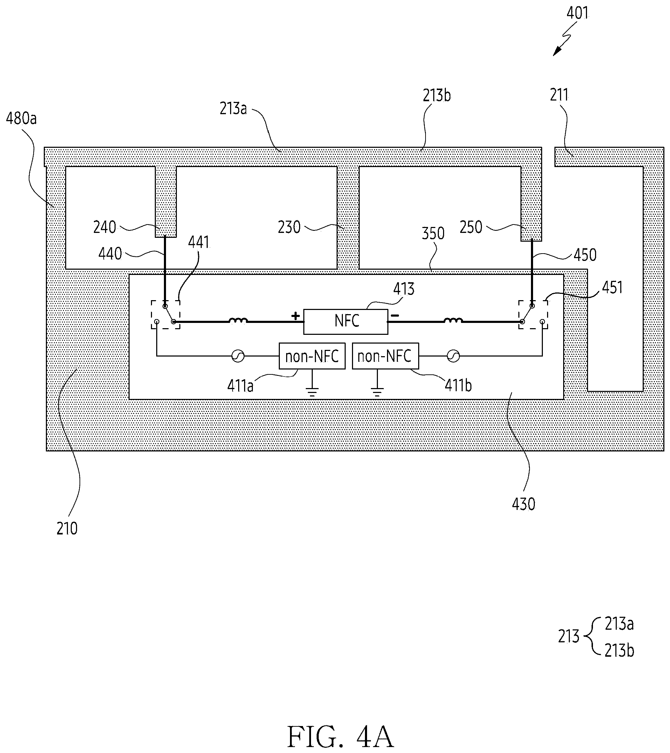

FIGS. 4A to 4B illustrate an example of an antenna structure shared by an NFC communication circuit and a wireless communication circuit according to an embodiment. The same reference number may be referred to for the same description between drawings.

Referring to FIG. 4A, an antenna structure 401 may include a metal frame 210. At least a portion of the metal frame 210, which is as a housing of an electronic device (e.g., the electronic device 101), may be disposed outside the electronic device 101. A first conductive portion 211 and a second conductive portion 213 of the metal frame 210 may be disposed outside the electronic device 101, and a non-conductive portion 212 may be formed between the first conductive portion 211 and the second conductive portion 213.

According to an embodiment, at least a portion of the metal frame 210 may include protrusions (e.g., a first connection portion 240 or a second connection portion 250) for electrical connection between a circuit board and the second conductive portion 213. In an embodiment, at least one wireless communication circuit may be disposed on the circuit board. At least one wireless communication circuit may be disposed in a circuit block 430 included in the circuit board. For example, the first connection portion 240 of the metal frame 210 may include a protrusion protruding inward from the second conductive portion 213. The first connection portion 240 may be electrically connected to a wireless communication circuit (e.g., a first non-NFC communication circuit 411a or an NFC communication circuit 413) through a first feed portion 440 (e.g., contact via a C-clip). For example, the second connection portion 250 of the metal frame 210 may include a protrusion protruding inward from the second conductive portion 213. The second connection portion 250 may be connected to a wireless communication circuit (e.g., a second non-NFC communication circuit 411b or the NFC communication circuit 413) through a second feed portion 450 (e.g., contact via a C-clip).

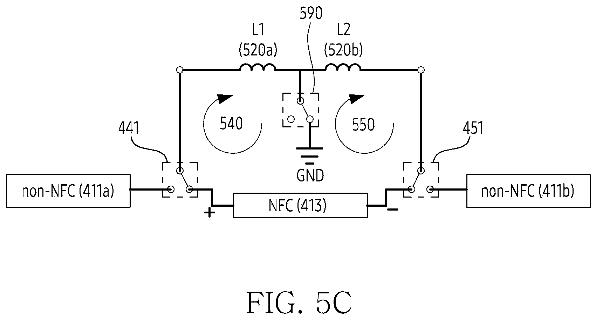

According to an embodiment, at least a portion of the metal frame 210 may include a support area connected to a support member 350. The metal frame 210 may include a ground portion 230 as the support area. RF signals fed through the first connection portion 240 or the second connection portion 250 may generate a loop current through a portion 213a of the second conductive portion 213 and a portion 213b of the second conductive portion 213. Although not illustrated in FIG. 4A, according to an additional embodiment, the ground portion 230 is not always connected to the support member 350 and may be selectively shorted or connected through a switch circuit. The connection between the ground portion 230 and the support member 350 through the switch circuit may be described with reference to FIG. 5C. In addition, the metal frame 210 may include a support area 480a as the support area.

According to an embodiment, at least a portion of the metal frame 210 may be electrically connected to a circuit board including the circuit block 430. For example, the circuit board may include a PCB. In addition, for example, the circuit board may mean an assembly in which a PCB is processed on at least a portion of the metal frame 210, that is, a PBA. Hereinafter, the circuit board may be referred to as a main board, a PBA, or a PCB.

According to an embodiment, at least one wireless communication circuit may be disposed on the circuit board. The circuit block 430 may include the at least one wireless communication circuit. According to an embodiment, at least one non-NFC communication circuit may be disposed on the circuit board. The circuit block 430 may include the at least one non-NFC communication circuit. For example, the at least one non-NFC communication circuit may include a first non-NFC communication circuit 411a and a second non-NFC communication circuit 411b. For example, a non-NFC communication circuit may include a radio frequency front end (RFFE) for cellular communication for a mobile network. According to an embodiment, the NFC communication circuit 413 may be disposed on the circuit board. The NFC communication circuit 413 may feed a positive signal through a first port (e.g., (+) terminal). The NFC communication circuit 413 may feed a negative signal through a second port (e.g., (-) terminal).

According to an embodiment, the at least one non-NFC communication circuit may radiate an RF signal using an antenna structure including a second conductive portion 213, a ground portion 230, a first connection portion 240, and a second connection portion 250. For example, a first loop (e.g., a loop formed in the order of the first connection portion 240, a portion 213a of the second conductive portion 213, the ground portion 230, and the support member 350) may operate as an antenna for the first non-NFC communication circuit 411a. Due to the support area 480a of the metal frame 210, a side of the antenna structure 401 may have a closed structure. For example, an antenna structure including the closed structure may operate as a slit antenna or a slot antenna. In addition, for example, a second loop (e.g., a loop formed in the order of the second connection portion 250, the support member 350, the ground portion 230, and a portion 213b of the second conductive portion 213) may operate as an antenna for the second non-NFC communication circuit 411b. Another side of the antenna structure 401 may have an opened structure, and an antenna structure including the opened structure may operate as an inverted-F antenna.

According to an embodiment, the NFC communication circuit 413 may share the antenna structure 401 of the at least one non-NFC communication circuit. For example, switch circuits (e.g., a first switch circuit 441 or a second switch circuit 451) may be used for **compatibility** between the NFC communication circuit 413 and the at least one non-NFC communication circuit. For example, each switch circuit may be replaced with components (e.g., switch module, filter) having substantially the same technical function. As an example, in the following drawings, the switch circuit is illustrated as a single switch. In an embodiment, for sharing the antenna structure 401, the first switch circuit 441 may be disposed on the circuit board. The circuit block 430 may include the first switch circuit 441. Through the first switch circuit 441, a first feed portion 440 for the first connection portion 240 may be selectively electrically connected to a non-NFC communication circuit (e.g., the first non-NFC communication circuit 411a) or the NFC communication circuit 413. In an embodiment, for sharing the antenna structure 401, the second switch circuit 451 may be disposed on the circuit board. The circuit block 430 may include the second switch circuit 451. Through the second switch circuit 451, a second feed portion 450 for the second connection portion 250 may be selectively electrically connected to a non-NFC communication circuit (e.g., the second non-NFC communication circuit 411b) or the NFC communication circuit 413. According to an embodiment, a processor (e.g., the processor 120) may be configured to select an NFC operation mode or a non-NFC operation mode by controlling the first switch circuit 441 and the second switch circuit 451.

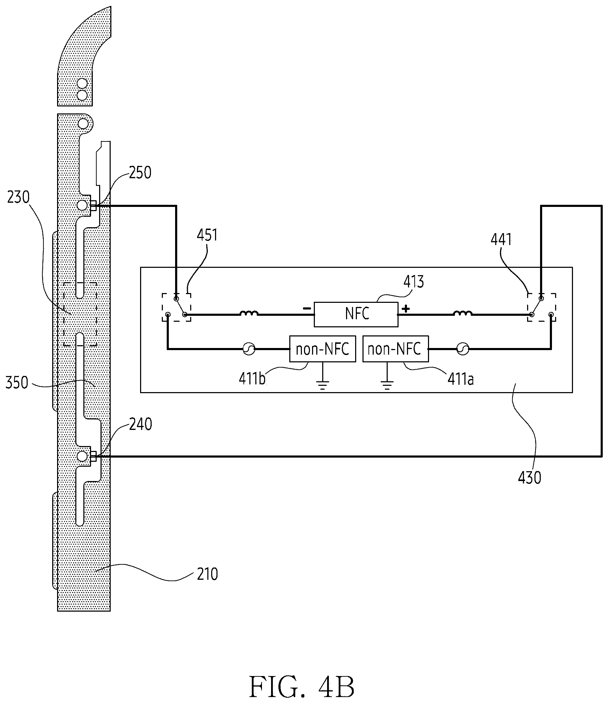

Referring to FIG. 4B, components (e.g., the first non-NFC communication circuit 411a, the second non-NFC communication circuit 411a, or the NFC communication circuit 413) of the circuit block 430 may be electrically connected to side members (e.g., the second conductive portion 213, the first connection portion 240, and the second connection portion 250) of the metal frame 210 of an electronic device (e.g., the electronic device 101). According to an embodiment, the first connection portion 240 may be connected to a first port (e.g., (+) terminal) of the NFC communication circuit 413 through the first switch circuit 441. For example, a positive signal of the NFC communication circuit 413 may be fed to the first connection portion 240 through the first port. For example, the first connection portion 240 may be a feeding point. According to an embodiment, the second connection portion 250 may be connected to a second port (e.g., (-) terminal) of the NFC communication circuit 413 through the second switch circuit 451. For example, a negative signal of the NFC communication circuit 413 may be fed to the second connection portion 250 through the second port. For example, the second connection portion 250 may be a feeding point.

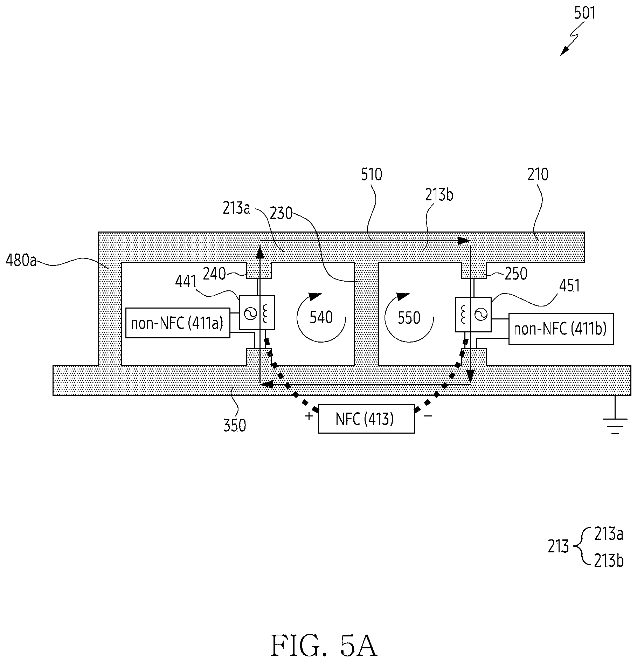

FIGS. 5A to 5C are a diagram for explaining a principle of a loop of an antenna structure and an NFC communication circuit according to an embodiment. The same reference number may be referred to for the same description between drawings.

Referring to FIG. 5A, an electronic device (e.g., the electronic device 101) may electrically connect an NFC communication circuit 413 and an antenna structure 501 for NFC communication. In an embodiment, the NFC communication circuit 413 may generate a balanced signal. The NFC communication circuit 413 may output a positive signal through a first port (e.g., (+) terminal). The NFC communication circuit 413 may output a negative signal through a second port (e.g., (-) terminal). A first switch circuit 441 may selectively electrically connect a first non-NFC communication circuit 411a or the NFC communication circuit 413 to a first connection portion 240. If the first switch 411 electrically connects the NFC communication circuit 413 to the first connection portion 240, the NFC communication circuit 413 may feed a positive signal. The positive signal may be provided to the first connection portion 240 through the first switch circuit 441. As the first port (e.g., (+) terminal) and the second port (e.g., (-) terminal) of the NFC communication circuit 413 are connected through the first connection portion 240 and the second connection portion 250, a loop radiation current may be generated. For example, the loop current may flow along a first loop 540 (e.g., a loop formed in the order of the first connection portion 240, a portion 213a of the second conductive portion 213, the ground portion 230, and the support member 350). A second switch circuit 451 may selectively electrically connect a second non-NFC communication circuit 411b or the NFC communication circuit 413 to a second connection portion 250. If the second switch circuit 451 electrically connects the NFC communication circuit 413 to the second connection portion 250, the NFC communication circuit 413 may feed a negative signal. The negative signal may be provided to the second connection portion 250 through the second switch circuit 451. The loop current may flow along a second loop 550 (e.g., a loop formed in the order of the ground portion 230, a portion 213b of the second conductive portion 213, the second connection portion 250, and the support member 350).

According to an embodiment, in case that it is difficult to generate a balanced signal in the NFC communication circuit 413, a balun may be additionally used. Through the balun, a signal of the NFC communication circuit 413 may output the positive signal and the negative signal. Through the balun, the NFC communication circuit 413 may transfer a positive signal to the first feed portion 440 and may transfer a negative signal to the second feed portion 450.

In order to implement an NFC antenna according to embodiments of the present disclosure, a first loop 540 and a second loop 550 formed through the metal frame 210 may be disposed side by side. Due to a common ground, the first loop 540 and the second loop 550 may be formed. As the first loop 540 and the second loop 550 are offset in a common ground area corresponding to the ground portion 230 in which the first loop 540 and the second loop 540 overlap, a radiation current having an entire loop 510 may be generated. Through the positive signal and the negative signal, the entire loop 510 may be formed on the antenna structure 501 in the order of the first connection portion 240, the second conductive portion 213, the second connection portion 250, and the support member 350. The entire loop 510 may surround the first loop 540 and the second loop 550.

In FIG. 5A, some components (e.g., the first non-NFC communication circuit 411a and the second non-NFC communication circuit 411b, the first switch circuit 441, and the second switch circuit 451) are illustrated within some areas of the metal frame 210, but such illustration is merely for the circuit description of the some components of the metal frame 210 and does not mean that the some components should be physically located between at least a portion (e.g., the second conductive portion 250) and at least a portion (e.g., the support member 350) of the metal frame 210. For example, the first non-NFC communication circuit 411a, the second non-NFC communication circuit 411b, the first switch circuit 441, and the second switch circuit 451 may be disposed on a circuit board (e.g., a PBA integrally formed with a metal frame or a separate PCB) inside the electronic device 101.

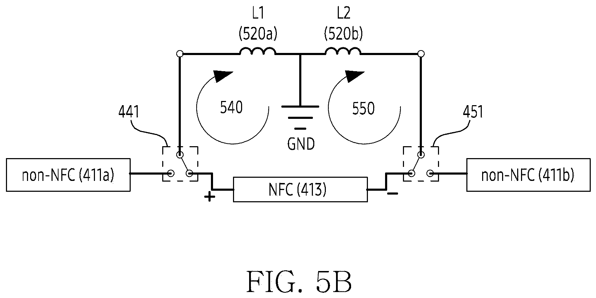

Referring to FIG. 5B, a connection structure of the NFC communication circuit 413 of FIG. 5A and the metal frame 210 may be represented by an electrical equivalent circuit. A first inductance 520a (L₁) represents an inductance generated in the first loop 540, and a second inductance 520b (L₂) represents an inductance generated in the second loop 550.

Referring to FIG. 5C, a switch circuit 590 including a switch or a lumped element (e.g., a resistor, an inductor, or a capacitor) may be disposed in an area where the first loop 540 and the second loop 550 overlap. For example, the ground portion 230 may be selectively electrically connected to ground through the switch circuit 590 including a switch or a lumped element. According to an additional embodiment, one area of the metal frame may be shorted through the on or off of the switch.

In FIGS. 5A to 5C, in order to adaptively operate the NFC operation mode and the non-NFC operation mode, switches have been exemplified, but embodiments of the present disclosure are not limited thereto. According to an embodiment, if at least a portion of the metal frame 210 functions only as an antenna for NFC, the switches may be omitted. At this time, the NFC circuit 413 may be electrically connected to the first connection portion 240 through a first feed portion (e.g., the first feed portion 440) and the second connection portion 250 through a second feed portion (e.g., the second feed portion 450) without a separate switch.

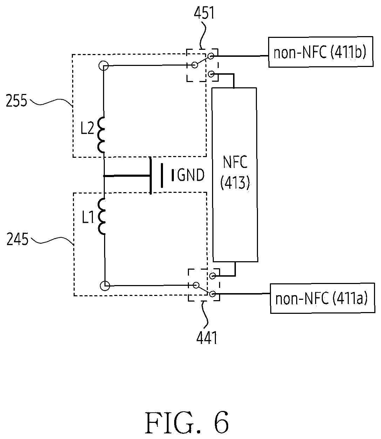

FIG. 6 illustrates an example of loop formation between an antenna structure and a wireless communication circuit, according to an embodiment. The antenna structure may include a first connection portion 240, a second conductive portion 213, a ground portion 230, and a second connection portion 250. The same reference number may be referred to for the same description between drawings.

Referring to FIG. 6, through at least one switch, the antenna structure may be connected to an NFC communication circuit 413 or another communication circuit. According to an embodiment, in case that NFC communication is not performed, a first non-NFC communication circuit 411a and a second non-NFC communication circuit 411b may be electrically connected to the antenna structure through switches. For example, through a first switch circuit (e.g., a first switch circuit 441), a first connection portion (e.g., a first connection portion 240) of the antenna structure may be electrically connected to the first non-NFC communication circuit 411a. In addition, for example, through a second switch circuit (e.g., a second switch circuit 451), a second connection portion (e.g., a second connection portion 250) of the antenna structure may be electrically connected to the second non-NFC communication circuit 411b.

According to an embodiment, the first non-NFC communication circuit 411a may radiate a signal through an antenna 245 using a first loop (e.g., a first loop 540). An inductance generated when an RF signal of the first non-NFC communication circuit 411a passes through the first loop 540 may be represented as L₁. For example, the first loop 540 may be formed to flow in the order of a first connection portion 240, a portion 213a of a second conductive portion 213, a ground portion 230, and a support member 350.

According to an embodiment, the second non-NFC communication circuit 411b may radiate a signal through an antenna 255 using a second loop (e.g., a second loop 550). An inductance generated when an RF signal of the second non-NFC communication circuit 411b passes through the second loop 550 may be represented as L₂. For example, the second loop 550 may be formed to flow in the order of the ground portion 230, a portion 213b of the second conductive portion 213, and the second connection portion 250.

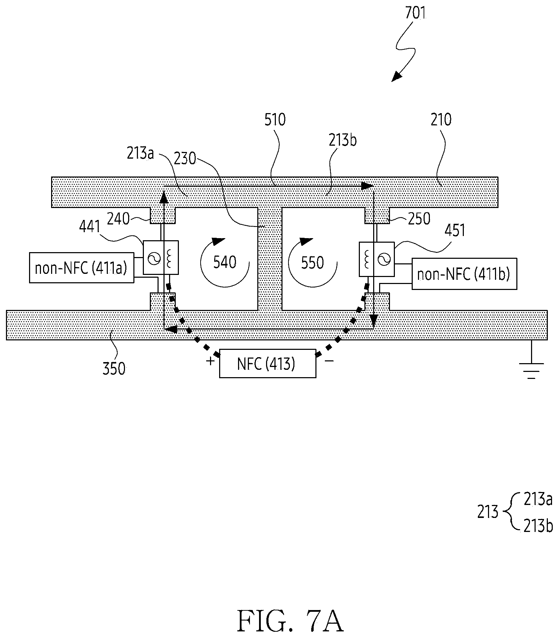

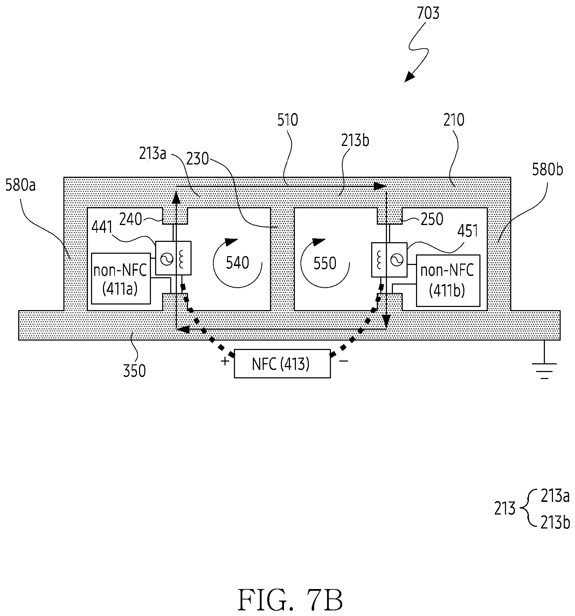

FIGS. 7A and 7B illustrate examples of an antenna structure shared by an NFC communication circuit and a wireless communication circuit according to an embodiment. The same reference number may be referred to for the same description between drawings.

Referring to FIG. 7A, an antenna structure 701 may include a metal frame 210. For example, in case that the electronic device 101 operates in a non-NFC operation mode, the antenna structure 701 may operate as an antenna for a first non-NFC communication circuit 411a and an antenna for a second non-NFC communication circuit 411b. At least a portion of the antenna structure 701 may operate as an antenna for the first non-NFC communication circuit 411a. At least a portion of the antenna structure 701 may operate as an antenna for the second non-NFC communication circuit 411a. A second conductive portion 213 of the metal frame 210 may be connected to a support member 350 through a ground portion 230. The ground portion 230 may function as a common ground for the two antennas.

Unlike FIGS. 4A to 5A, in an embodiment, a side of the antenna structure 701 may be opened, like another side of the antenna structure 701. For example, for the first non-NFC circuit 411a, without a support area 480a, a structure including a first connection portion 240, a portion 213a of the second conductive portion 213, and a ground portion 230 may operate as an inverted-F antenna. In substantially the same manner as in FIGS. 4A to 5A, for the second non-NFC circuit 411b, a structure including a second connection portion 250, a portion 213b of the second conductive portion 213, and the ground portion 230 may operate as an inverted-F antenna.

In case that the electronic device 101 operates in an NFC operation mode, the NFC circuit 413 may be electrically connected to the antenna structure 701. In substantially the same manner as in FIG. 5A, a first loop 540 and a second loop 550 may be formed, and the entire loop 510 for NFC signals may be formed. The electrical equivalent circuit of FIG. 5B may be referred to for an electrical connection between the NFC circuit 413 and the antenna structure 701.

Referring to FIG. 7B, an antenna structure 703 may include a metal frame 210. In an embodiment, in case that the electronic device 101 operates in a non-NFC operation mode, the antenna structure 703 may operate as an antenna for the first non-NFC communication circuit 411a and an antenna for the second non-NFC communication circuit 411b. For example, at least a portion of the antenna structure 703 may operate as an antenna for the first non-NFC communication circuit 411a. For example, at least a portion of the antenna structure 703 may operate as an antenna for the second non-NFC communication circuit 411a. The second conductive portion 213 of the metal frame 210 may be connected to the support member 350 through the ground portion 230. The ground portion 230 may function as a common ground for the two antennas.

A first support member 580a may be disposed on a side of the antenna structure 703. The portion 213a of the second conductive portion 213 may be connected to the support member 350 through the first support member 580a. For the first non-NFC circuit 411a, a structure having a closed structure through the first support member 580a may include the first support member 580a, the first connection portion 240, the portion 213a of the second conductive portion 213, and the ground portion 230. The structure may operate as a slot antenna or a slit antenna. Unlike FIGS. 4A to 5A, according to an embodiment, a second support member 580b may be disposed on a side of the antenna structure 703. The portion 213b of the second conductive portion 213 may be connected to the support member 350 through the second support member 580b. For the second non-NFC circuit 411b, a structure having a closed structure through the second support member 580b may include the second support member 580b, the second connection portion 250, the portion 213b of the second conductive portion 213, and the ground portion 230. The structure may operate as a slot antenna or a slit antenna.

In case that the electronic device 101 operates in the NFC operation mode, the NFC circuit 413 may be electrically connected to the antenna structure 703. In substantially the same manner as in FIG. 5A, the first loop 540 and the second loop 550 may be formed, and the entire loop 510 for NFC signals may be formed. The electrical equivalent circuit of FIG. 5B may be referred to for an electrical connection between the NFC circuit 413 and the antenna structure 703.

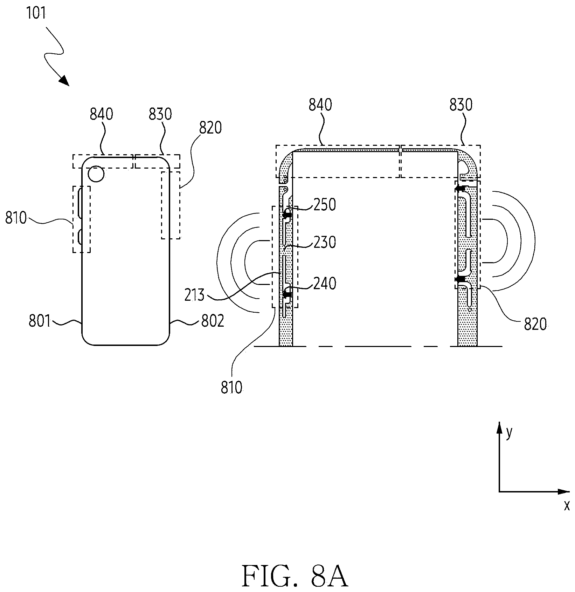

FIGS. 8A to 8B illustrate an example of arrangement of an antenna structure for NFC. Herein, an antenna structure for NFC may include the ground portion 230, the first connection portion 240, the second conductive portion 213, and/or the second connection portion 250 described in FIGS. 4A to 7B. According to an embodiment, the second conductive portion 213, which is a portion of the metal frame 210 disposed outside the electronic device 101, may operate as a radiator through which a radiation current for NFC signals flows via feeding of a positive signal to a first connection portion 240 and a negative signal to the second connection portion 250.

Referring to FIG. 8A, the electronic device 101 may include two antenna structures for NFC. According to an embodiment, the electronic device 101 may include an antenna structure located in each of at least two areas among a plurality of areas (e.g., a first area 810, a second area 820, a third area 830, and a fourth area 840). For example, a first antenna structure for NFC may be disposed in the first area 810 of a side 801 of the electronic device 101 in which a volume key 203 and a power key 205 are disposed. In addition, a second antenna structure 820 for NFC may be disposed in a second area 820 of another side 802 opposite to the side 801 of the electronic device 101. As the first antenna structure 810 for NFC and the second antenna structure 820 for NFC are disposed in different directions, areas to which NFC signals are radiated may be expanded.

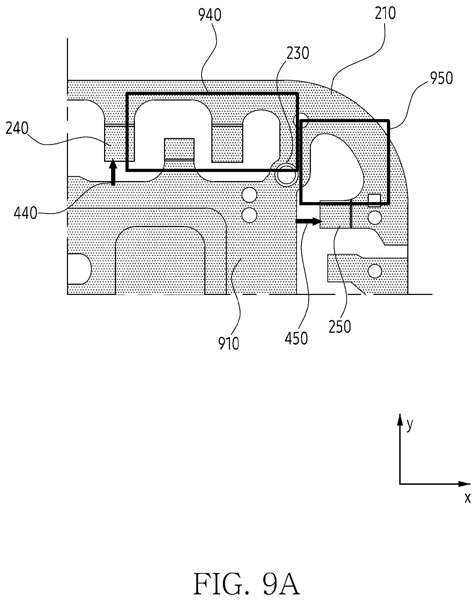

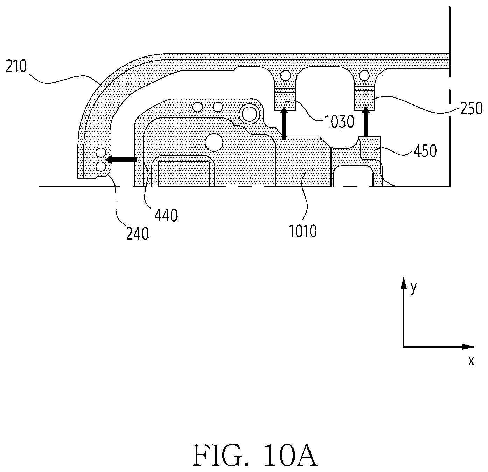

For example, an antenna structure may be disposed in the third area 830. A description of an antenna structure of FIGS. 9A to 9B may be referred to for the antenna structure. In addition, for example, an antenna structure may be disposed in the fourth area 840. A description of an antenna structure of FIGS. 10A to 10C may be referred to for the antenna structure. Through the antenna structures of FIGS. 9A to 10C, an antenna structure for non-NFC and an antenna structure for NFC may coexist in the electronic device 101.

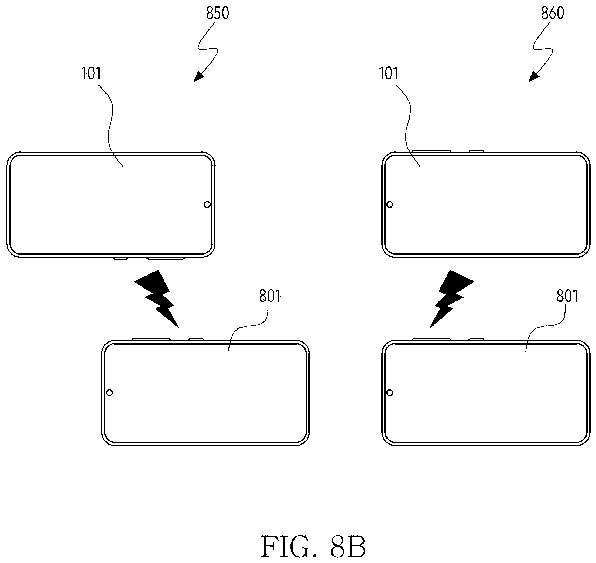

Referring to FIG. 8B, the electronic device 101 may include two antenna structures for NFC. The electronic device 101 may perform NFC communication with another electronic device (e.g., the electronic device 102) through one of antenna structures for NFC disposed on both sides 801 and 802 of the electronic device 101. For example, a user of the electronic device 101 may use an NFC function with another electronic device while viewing a display. As an example 850, the electronic device 101 may perform NFC communication with another electronic device, through an antenna structure of a side at which a key (e.g., the volume key 203 or the power key 205) is disposed. As another example 860, the electronic device 101 may perform NFC communication with another electronic device through an antenna structure of a side opposite to the side at which the key (e.g., the volume key 203 or the power key 205) is disposed.

As a hardware key (e.g., the volume key 203 or the power key 205) is located at a location where an antenna structure for NFC according to embodiments of the present disclosure is formed, a user may recognize the hardware key as an indicator in which an NFC antenna is disposed. For example, since an antenna structure for NFC utilizes a portion of a metal frame near the hardware key disposed at a side as an NFC antenna, a location of the NFC antenna may be clearly recognized by the user.

A structure operating as an antenna for NFC by utilizing a portion (e.g., the second conductive portion 213) of the metal frame 210 formed on a side of the electronic device 101 as a radiator is described in FIGS. 2A to 8B. The structure according to embodiments of the present disclosure may use a conductive portion of the metal frame 210 located at an upper end or a lower end of the electronic device 101 as a radiator for an NFC signal, as well as a side of the electronic device 101. Hereinafter, an example in which an antenna structure for NFC according to embodiments of the present disclosure is formed in the upper end of the electronic device 101 is described with reference to FIGS. 9A to 10C.

FIGS. 9A to 9B illustrate an example in which an antenna structure for NFC according to an embodiment is disposed at an upper end of an electronic device (e.g., the electronic device 101). A metal frame 210 of the electronic device 101 may include a plurality of conductive portions. For example, the conductive portions may be segmented by a non-conductive portion, which is a segment portion. A conductive portion to be described later may refer to a conductive portion disposed at an upper end (e.g., (+) y-axis direction) of the electronic device 101 among the plurality of conductive portions.

Referring to FIG. 9A, the metal frame 210 may include a conductive portion 913 disposed at an upper end (e.g., an area of the electronic device 101 including an end facing (+) y-axis direction) of the electronic device 101. In an embodiment, a first connection portion 240 may be formed from the conductive portion 913 to face the inside of the electronic device 101. In an embodiment, a second connection portion 250 may be formed from the conductive portion 913 to face the inside of the electronic device 101. A ground portion 230 may be disposed between the conductive portion 913 and a support member 910 of the metal frame 210. For example, since the ground portion 230, which is a common ground path, is located near an outer corner of the electronic device 101, an operation area of the NFC function may be extended. According to an embodiment, the ground portion 230 may be integrally formed with the conductive portion 913 and the support member 910. The support member 910 may include a first feed portion 440 and a second feed portion 450. The first feed portion 440 may be electrically connected to the first connection portion 240. Although not illustrated in FIG. 9A, the first feed portion 440 may include an elastic structure (e.g., C-clip), and may be electrically connected to the first connection portion 240 through the elastic structure. The second feed portion 450 may be electrically connected to the second connection portion 250. The second feed portion 450 may include an elastic structure (e.g., a C-clip), and may be electrically connected to the second connection portion 250 through the elastic structure.

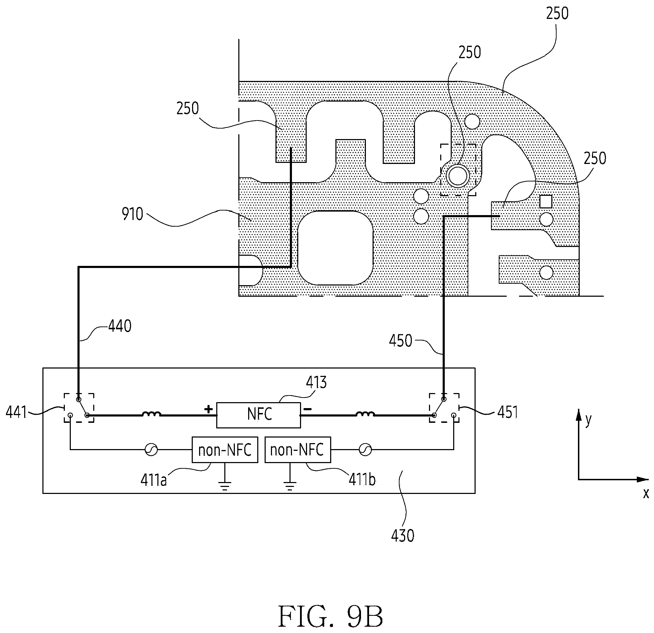

Referring to FIG. 9B, the support member 910 of the metal frame 210 may be electrically connected to a circuit board including a circuit block 430. As an example, the circuit board may be disposed in a PBA form with the support member 910. As another example, a circuit board (e.g., the circuit block 430) may be disposed on a surface of the support member 910 as a separate PCB. A first non-NFC communication circuit 411a and a second non-NFC communication circuit 411b may be included in the circuit board. In addition, the NFC communication circuit 413 may be disposed on the circuit board. The NFC communication circuit 413 may feed a positive signal through a first switch circuit 441 and the first feed portion 440. The NFC communication circuit 413 may feed a negative signal through a second switch circuit 451 and the second feed portion 450.

According to an embodiment, a positive signal of an NFC communication circuit (e.g., the NFC communication circuit 413) may be transmitted to the first connection portion 240 through the first feed portion 440. A negative signal of an NFC communication circuit (e.g., the NFC communication circuit 413) may be transmitted to the second connection portion 250 through the second feed portion 450. Since the ground portion 230 functions as an antenna ground, a first loop 940 may be formed in the order of the first connection portion 240, a portion of the conductive portion 913, the ground portion 230, and the support member 910. A portion of the conductive portion 913 may radiate an NFC signal through an electromagnetic field formed at the upper end of the electronic device 101 along the first loop 940. A second loop 950 may be formed in the order of the ground portion 230, another portion of the conductive portion 913, the second connection portion 250, and the support member 910. Another portion of the conductive portion 913 may radiate an NFC signal through an electromagnetic field formed at a side of the electronic device 101 along the second loop 950. An operating area of the NFC function may be expanded.

Since a direction of a current flowing through the conductive portion 913 in the first loop 940 coincides with a direction of a current flowing through the conductive portion 913 in the second loop 950, the entire loop for the NFC communication circuit 413 may be formed in the order of the first connection portion 240, the conductive portion 913, and the second connection portion 250. A potential at the first connection portion 240 may be formed to be higher than a potential at the second connection portion 250. For example, a current may flow in the order of the first connection portion 240, the conductive portion 913, and the second connection portion 250. According to an embodiment, the electronic device 101 may transmit an NFC signal to the outside through a radiation current flowing along the conductive portion 913.

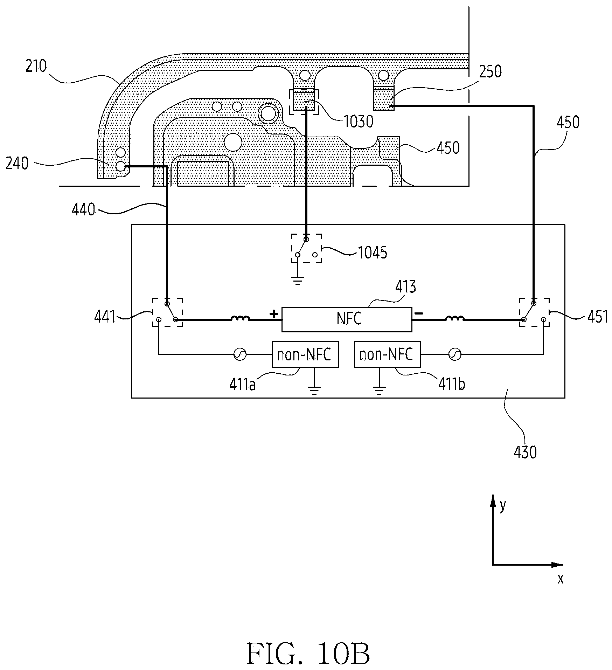

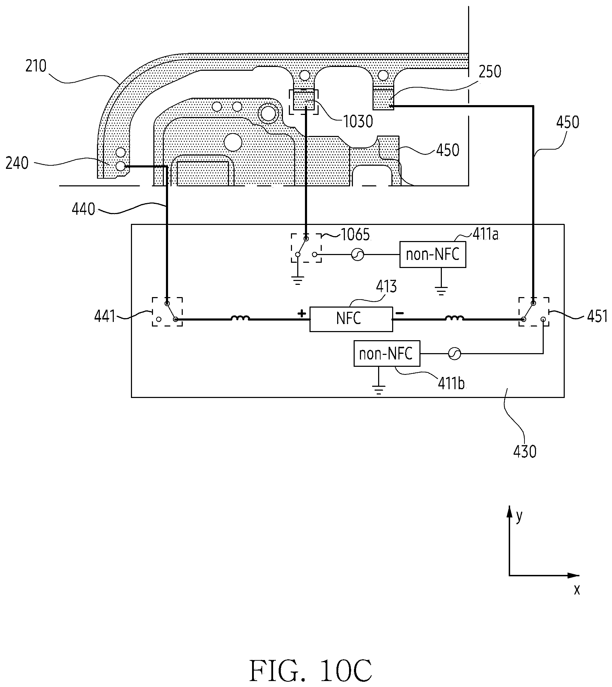

FIGS. 10A, 10B, and 10C illustrate an example in which an antenna structure for NFC is disposed at an upper end of an electronic device.

Referring to FIG. 10A, a metal frame 210 may include a conductive portion 1013 disposed in an upper end of the electronic device 101 (e.g., an area of the electronic device 101 including an end facing (+) y-axis direction). A first connection portion 240 may be formed to face the inside of the electronic device 101 from the conductive portion 1013. A second connection portion 250 may be formed to face the inside of the electronic device 101 from the conductive portion 1013. A ground portion 1030 may be disposed between the conductive portion 1013 and a support member 1010 of the metal frame 210. According to an embodiment, a ground portion 1030 may be integrally formed with the conductive portion 1013. The support member 1010 may include a first feed portion 440 and a second feed portion 450. The first feed portion 440 may be electrically connected to the first connection portion 240. Although not illustrated in FIG. 10A, the first feed portion 440 may be electrically connected to the first connection portion 240 through electrical contact with a separate structure (e.g., C-clip). The second feed portion 450 may be electrically connected to the second connection portion 250. The second feed portion 450 may be electrically connected to the second connection portion 250 through electrical contact of a separate structure (e.g., a C-clip).

Referring to FIG. 10B, the support member 1010 of the metal frame 210 may be electrically connected to a circuit board including the circuit block 430. As an example, the circuit board may be disposed in a PBA form with the support member 1010. As another example, the circuit board may be disposed on a surface of the support member 1010 as a separate PCB. For example, a first non-NFC communication circuit 411a and a second non-NFC communication circuit 411b may be included in the circuit board. In addition, an NFC communication circuit 413 may be disposed in the circuit board. The NFC communication circuit 413 may feed a positive signal through a first switch circuit 441 and the first feed portion 440. The NFC communication circuit 413 may feed a negative signal through a second switch circuit 451 and the second feed portion 450.

According to an embodiment, a positive signal of an NFC communication circuit (e.g., the NFC communication circuit 413) may be transmitted to the first connection portion 240 through the first feed portion 440. A negative signal of an NFC communication circuit (e.g., the NFC communication circuit 413) may be transmitted to the second connection portion 250 through the second feed portion 450. According to an embodiment, a switch circuit 1045 may be connected to the ground portion 1030. The ground portion 1030 may be shorted through the switch circuit 1045 or function as a ground. A current may flow in the order of the first connection portion 240, a portion of the conductive portion 1013, and the ground portion 1030. A current may flow in the order of the ground portion 1030, another portion of the conductive portion 1013, and the second connection portion 250. That is, a direction of a current flowing in the conductive portion 1013 through the first connection portion 240 and a direction of a current flowing in the conductive portion 1013 through the second connection portion 250 may be identical to each other. The entire loop for the NFC communication circuit 413 may be formed in the order of the first connection portion 240, the conductive portion 1013, and the second connection portion 250. According to an embodiment, the electronic device 101 may transmit an NFC signal to the outside through a radiation current flowing along the conductive portion 1013.

Referring to FIG. 10C, according to an embodiment, a switch circuit 1065 may be connected to the ground portion 1030. The switch circuit 1065 may be disposed on a circuit board. The switch circuit 1065 may selectively connect a ground or a first non-NFC communication circuit 411a.

In case that the electronic device 101 is in the NFC operation mode, the NFC communication circuit 413 may be electrically connected to the conductive portion 1013 through the first switch circuit 441 and the second switch circuit 451. A signal fed in the NFC communication circuit 413 may be radiated through the conductive portion 1013. In this case, the switch circuit 1065 may be connected to the ground. However, in case that the electronic device 101 is in the non-NFC operation mode, the switch circuit 1065 may be connected to the first non-NFC communication circuit 411a. For example, as an RF signal of the first non-NFC communication circuit 411a is fed to the ground portion 1030, the electronic device 101 may perform wireless communication. In addition, for example, as an RF signal of the second non-NFC communication circuit 411b is fed to the second connection portion 250, the electronic device 101 may perform wireless communication.

According to various embodiments, an electronic device 101 may comprise a metal frame 210, a circuit board (e.g., the circuit block 430), at least one wireless communication circuit 411a and 411b disposed on the circuit board, a near field communication (NFC) communication circuit 413 disposed on the circuit board, a first switch circuit 441, and a second switch circuit 451. The metal frame 210 may include a conductive portion 213, a first connection portion 240 formed in one direction from the conductive portion 213, a second connection portion 250 formed in one direction from the conductive portion 213, and a ground portion 230 formed in one direction from the conductive portion 213. The ground portion 230 may be disposed, based on the conductive portion 213, between the first connection portion 240 and the second connection portion 250. The first connection portion 240 of the metal frame 210 may be electrically connected to the at least one wireless communication circuit or the NFC communication circuit 413 through the first switch circuit 441. The second connection portion 250 of the metal frame 210 may be electrically connected to the at least one wireless communication circuit or the NFC communication circuit 413 through the second switch circuit 451. When the NFC communication circuit 413 is electrically connected to the first connection portion 240 and the second connection portion 250 of the metal frame 210, a positive signal may be fed to the first connection portion 240 and a negative signal may be fed to the second connection portion 250.

According to an embodiment, the conductive portion 213 may be spaced apart from a support member 350 of the metal frame 210 by a predetermined distance. The ground portion 230 may be disposed so as to connect the conductive portion 213 of the metal frame 210 and the support member 350.

According to an embodiment, a first feed portion 440 of the support member 350 may be electrically connected to the first connection portion 240. A second feed portion 450 of the support member 350 may be electrically connected to the second connection portion 250.

According to an embodiment, the at least one wireless communication circuit may include a first non-NFC communication circuit 411a and a second non-NFC communication circuit 411b. The first feed portion 440 may be selectively connected, through the first switch circuit 441, to either the first non-NFC communication circuit 411a or the NFC communication circuit 413. The second feed portion 450 may be selectively connected, through the second switch circuit 451, to either the second non-NFC communication circuit 411b or the NFC communication circuit 413.

According to an embodiment, the electronic device 101 may comprise a ground switch 590 connected to one end of the conductive portion 213. The conductive portion 213 may be spaced apart from the support member 350 of the metal frame 210 by a predetermined distance. The ground switch 590 may be configured to selectively connect or disconnect one end of the conductive portion 213 and the support member 350.

According to an embodiment, the conductive portion 213 may be disposed, among a plurality of conductive portions of the metal frame 210, on a side of the electronic device 101 on which a power key 205 or a volume key 203 is located.

According to an embodiment, the conductive portion 213 may be disposed, among a plurality of conductive portions of the metal frame 210, on an upper end of the electronic device 101.

According to an embodiment, the at least one wireless communication circuit may include a first non-NFC communication circuit 411a and a second non-NFC communication circuit 411b. The conductive portion 213 may include a first conductive portion 213a and a second conductive portion 213b. When the first switch circuit 441 is connected to the first non-NFC communication circuit 411a, the first conductive portion 213a, the first connection portion 240, and the ground portion 230 may operate as an inverted-F antenna for the first non-NFC communication circuit 411a. When the second switch circuit 451 is connected to the second non-NFC communication circuit 411b, the second conductive portion 213b, the second connection portion 250, and the ground portion 230 may operate as an inverted-F antenna for the second non-NFC communication circuit 411b.

According to an embodiment, the conductive portion 213 may be spaced apart from the support member 350 of the metal frame 210 by a predetermined distance. The at least one wireless communication circuit may include a first non-NFC communication circuit 411a and a second non-NFC communication circuit 411b. The conductive portion 213 may include a first conductive portion 213a and a second conductive portion 213b. The conductive portion 213 may include a first support member connecting the first conductive portion 213a with the support member 350. When the first switch circuit 441 is connected to the first non-NFC communication circuit 411a, the first support member, the first conductive portion 213a, the first connection portion 240, and the ground portion 230 may operate as a slot antenna for the first non-NFC communication circuit 411a. When the second switch circuit 451 is connected to the second non-NFC communication circuit 411b, the second conductive portion 213b, the second connection portion 250, and the ground portion 230 may operate as an inverted-F antenna for the second non-NFC communication circuit 411b.

According to an embodiment, the conductive portion 213 may be spaced apart from the support member 350 of the metal frame 210 by a predetermined distance. The at least one wireless communication circuit may include a first non-NFC communication circuit 411a and a second non-NFC communication circuit 411b. The conductive portion 213 may include a first conductive portion 213a and a second conductive portion 213b. The conductive portion 213 may include a first support member connecting the first conductive portion 213a with the support member 350.

The conductive portion 213 may include a second support member connecting the second conductive portion 213b with the support member 350.

When the first switch circuit 441 is connected to the first non-NFC communication circuit 411a, the first support member, the first conductive portion 213a, the first connection portion 240, and the ground portion 230 may operate as a slot antenna for the first non-NFC communication circuit 411a. When the second switch circuit 451 is connected to the second non-NFC communication circuit 411b, the second support member, the second conductive portion 213b, the second connection portion 250, and the ground portion 230 may operate as a slot antenna for the first non-NFC communication circuit 411a.

According to an embodiment, the electronic device 101 may further comprise at least one processor 120 disposed on the circuit board. When the at least one processor 120 operates in an NFC mode, the first switch circuit 441 and the second switch circuit 451 may be electrically connected to the NFC communication circuit 413. The NFC communication circuit 413 may be configured to generate the positive signal and the negative signal.

According to an embodiment, the conductive portion 213 may include a first conductive portion 213a disposed in a direction from the ground portion 230 toward the first connection portion 240, and a second conductive portion 213b disposed in a direction from the ground portion 230 toward the second connection portion 250. When the NFC communication circuit 413 is electrically connected to the first connection portion 240 and the second connection portion 250 of the metal frame 210, a direction of a current flowing through the first conductive portion 213a may be same as a direction of a current flowing through the second conductive portion 213b.

According to an embodiment, a potential of the first conductive portion 213a may be formed higher than that of the second conductive portion 213b, in accordance with the positive signal and the negative signal.

According to an embodiment, the NFC communication circuit 413 may be a balanced circuit. According to a differential mode of the balanced circuit, a first terminal of the NFC communication circuit 413 may be configured to output the positive signal, and a negative second terminal of the NFC communication circuit 413 may be configured to output the negative signal.

According to an embodiment, the electronic device 101 may further comprise a balun circuit. The balun circuit may be configured to generate the positive signal and the negative signal based on a signal of the NFC communication circuit 413.

According to an embodiment, the circuit board may include a printed circuit board (PCB) disposed on one surface of the support member 350 of the metal frame 210 or a printed board assembly (PBA) integrally formed with the support member 350 of the metal frame 210.

According to an embodiment, the metal frame 210 may include another conductive portion 213, a third connection portion formed from the other conductive portion 213, a fourth connection portion formed from the other conductive portion 213, and another ground portion 230 formed in one direction from the other conductive portion 213. The other ground portion 230 may be disposed, along the other conductive portion 213, between the third connection portion and the fourth connection portion. The third connection portion and the fourth connection portion may be electrically connected to the circuit board. The third connection portion and the fourth connection portion of the metal frame 210 may be electrically connected to the NFC communication circuit 413.

According to an embodiment, the conductive portion 213 may be disposed on one side of the electronic device 101. The other conductive portion 213 may be disposed on another side opposite the one side of the electronic device 101.

According to an embodiment, the first connection portion 240 may be electrically connected to the circuit board via a C-clip. The second connection portion 250 may be electrically connected to the circuit board via a C-clip.

According to various embodiments, an electronic device 101 may comprise a metal frame 210, a circuit board, a near field communication (NFC) communication circuit 413 disposed on the circuit board, wherein the metal frame 210 may include a conductive portion 213, a first connection portion 240 formed in one direction from the conductive portion 213, a second connection portion 250 formed in one direction from the conductive portion 213, and a ground portion 230 formed in one direction from the conductive portion 213. The ground portion 230, based on the conductive portion 213, may be disposed between the first connection portion 240 and the second connection portion 250. The first connection portion 240 of the metal frame 210 may be electrically connected to the NFC communication circuit 413. The second connection portion 250 of the metal frame 210 may be electrically connected to the NFC communication circuit 413. A positive signal may be fed to the first connection portion 240 and a negative signal may be fed to the second connection portion 250.

Methods according to embodiments described in claims or specifications of the present disclosure may be implemented as a form of hardware, software, or a combination of hardware and software.

In case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

Meanwhile, specific embodiments have been described in the detailed description of the present disclosure, and of course, various modifications are possible without departing from the scope of the present disclosure.

## Claims

1. An electronic device (101), comprising:
a metal frame (210);
a circuit board;
at least one wireless communication circuit (411a, 411b) disposed on the circuit board;
a near field communication (NFC) communication circuit (413) disposed on the circuit board;
a first switch circuit (441); and
a second switch circuit (451),
wherein the metal frame (210) includes:
a conductive portion (213), a first connection portion (240) formed in one direction from the conductive portion (213), a second connection portion (250) formed in one direction from the conductive portion (213), and a ground portion (230) formed in one direction from the conductive portion (213),
wherein the ground portion (230) is disposed, based on the conductive portion (213), between the first connection portion (240) and the second connection portion (250),
wherein the first connection portion (240) of the metal frame (210) is electrically connected to the at least one wireless communication circuit or the NFC communication circuit (413) through the first switch circuit (441),
wherein the second connection portion (250) of the metal frame (210) is electrically connected to the at least one wireless communication circuit or the NFC communication circuit (413) through the second switch circuit (451), and
wherein, when the NFC communication circuit (413) is electrically connected to the first connection portion (240) and the second connection portion (250) of the metal frame (210), a positive signal is fed to the first connection portion (240) and a negative signal is fed to the second connection portion (250).

2. The electronic device (101) of claim **1,**
wherein the conductive portion (213) is spaced apart from a support member (350) of the metal frame (210) by a predetermined distance, and
wherein the ground portion (230) is disposed so as to connect the conductive portion (213) of the metal frame (210) and the support member (350).

3. The electronic device (101) of claims 1 to 2,
wherein a first feed portion (440) of the support member (350) is electrically connected to the first connection portion (240), and
wherein a second feed portion (450) of the support member (350) is electrically connected to the second connection portion (250).

4. The electronic device (101) of claims 1 to 3,
wherein the at least one wireless communication circuit includes a first non-NFC communication circuit (411a) and a second non-NFC communication circuit (411b),
wherein the first feed portion (440) is selectively connected, through the first switch circuit (441), to either the first non-NFC communication circuit (411a) or the NFC communication circuit (413), and
wherein the second feed portion (450) is selectively connected, through the second switch circuit (451), to either the second non-NFC communication circuit (411b) or the NFC communication circuit (413).

5. The electronic device (101) of claims 1 to 4, further comprising:
a ground switch (590) connected to one end of the conductive portion (213),
wherein the conductive portion (213) is spaced apart from the support member (350) of the metal frame (210) by a predetermined distance, and
wherein the ground switch (590) is configured to selectively connect or disconnect one end of the conductive portion (213) and the support member (350).

6. The electronic device (101) of claims 1 to 5, wherein the conductive portion (213) is disposed, among a plurality of conductive portions of the metal frame (210), on a side of the electronic device (101) on which a power key (205) or a volume key (203) is located.

7. The electronic device (101) of claims 1 to 6, wherein the conductive portion (213) is disposed, among a plurality of conductive portions of the metal frame (210), on an upper end of the electronic device (101).

8. The electronic device (101) of claims 1 to 7,
wherein the at least one wireless communication circuit includes a first non-NFC communication circuit (411a) and a second non-NFC communication circuit (411b),
wherein the conductive portion (213) includes a first conductive portion (213a) and a second conductive portion (213b),
wherein, when the first switch circuit (441) is connected to the first non-NFC communication circuit (411a), the first conductive portion (213a), the first connection portion (240), and the ground portion (230) operate as an inverted-F antenna for the first non-NFC communication circuit (411a), and
wherein, when the second switch circuit (451) is connected to the second non-NFC communication circuit (411b), the second conductive portion (213b), the second connection portion (250), and the ground portion (230) operate as an inverted-F antenna for the second non-NFC communication circuit (411b).

9. The electronic device (101) of claims 1 to 8,
wherein the conductive portion (213) is spaced apart from the support member (350) of the metal frame (210) by a predetermined distance,
wherein the at least one wireless communication circuit includes a first non-NFC communication circuit (411a) and a second non-NFC communication circuit (411b),
wherein the conductive portion (213) includes a first conductive portion (213a), a second conductive portion (213b), and a first support member connecting the first conductive portion (213a) with the support member (350),
wherein, when the first switch circuit (441) is connected to the first non-NFC communication circuit (411a), the first support member, the first conductive portion (213a), the first connection portion (240), and the ground portion (230) operate as a slot antenna for the first non-NFC communication circuit (411a), and
wherein, when the second switch circuit (451) is connected to the second non-NFC communication circuit (411b), the second conductive portion (213b), the second connection portion (250), and the ground portion (230) operate as an inverted-F antenna for the second non-NFC communication circuit (411b).

10. The electronic device (101) of claims 1 to 9,
wherein the conductive portion (213) is spaced apart from the support member (350) of the metal frame (210) by a predetermined distance,
wherein the at least one wireless communication circuit includes a first non-NFC communication circuit (411a) and a second non-NFC communication circuit (411b),
wherein the conductive portion (213) includes a first conductive portion (213a), a second conductive portion (213b), a first support member connecting the first conductive portion (213a) with the support member (350), and a second support member connecting the second conductive portion (213b) with the support member (350),
wherein, when the first switch circuit (441) is connected to the first non-NFC communication circuit (411a), the first support member, the first conductive portion (213a), the first connection portion (240), and the ground portion (230) operate as a slot antenna for the first non-NFC communication circuit (411a), and
wherein, when the second switch circuit (451) is connected to the second non-NFC communication circuit (411b), the second support member, the second conductive portion (213b), the second connection portion (250), and the ground portion (230) operate as a slot antenna for the first non-NFC communication circuit (411a).

11. The electronic device (101) of claims 1 to 10, further comprising:
at least one processor (120) disposed on the circuit board,
wherein, when the at least one processor (120) operates in an NFC mode, the first switch circuit (441) and the second switch circuit (451) are electrically connected to the NFC communication circuit (413), and
wherein the NFC communication circuit (413) is configured to generate the positive signal and the negative signal.

12. The electronic device (101) of claims 1 to 11,
wherein the conductive portion (213) includes a first conductive portion (213a) disposed in a direction from the ground portion (230) toward the first connection portion (240), and a second conductive portion (213b) disposed in a direction from the ground portion (230) toward the second connection portion (250),
wherein, when the NFC communication circuit (413) is electrically connected to the first connection portion (240) and the second connection portion (250) of the metal frame (210), a direction of a current flowing through the first conductive portion (213a) is same as a direction of a current flowing through the second conductive portion (213b), and
wherein, in accordance with the positive signal and the negative signal, a potential of the first conductive portion (213a) is formed higher than that of the second conductive portion (213b).

13. The electronic device (101) of claims 1 to 12,
wherein the metal frame (210) further includes another conductive portion (213), a third connection portion formed from the other conductive portion (213), a fourth connection portion formed from the other conductive portion (213), and another ground portion (230) formed in one direction from the other conductive portion (213),
wherein the other ground portion (230) is disposed, along the other conductive portion (213), between the third connection portion and the fourth connection portion,
wherein the third connection portion and the fourth connection portion are electrically connected to the circuit board,
wherein the third connection portion and the fourth connection portion of the metal frame (210) are electrically connected to the NFC communication circuit (413),
wherein the conductive portion (213) is disposed on one side of the electronic device (101), and
wherein the other conductive portion (213) is disposed on another side opposite the one side of the electronic device (101).

14. The electronic device (101) of claims 1 to 13,
wherein the first connection portion (240) is electrically connected to the circuit board via a C-clip, and
wherein the second connection portion (250) is electrically connected to the circuit board via a C-clip.

15. An electronic device (101) comprising:
a metal frame (210);
a circuit board; and
a near field communication (NFC) communication circuit (413) disposed on the circuit board;
wherein the metal frame (210) includes:
a conductive portion (213);
a first connection portion (240) formed in one direction from the conductive portion (213);
a second connection portion (250) formed in one direction from the conductive portion (213); and
a ground portion (230) formed in one direction from the conductive portion (213),
wherein the ground portion (230), based on the conductive portion (213), is disposed between the first connection portion (240) and the second connection portion (250),
wherein the first connection portion (240) of the metal frame (210) is electrically connected to the NFC communication circuit (413),
wherein the second connection portion (250) of the metal frame (210) is electrically connected to the NFC communication circuit (413), and
wherein a positive signal is fed to the first connection portion (240) and a negative signal is fed to the second connection portion (250).
